Europäisches Patentamt

European Patent Office

Office européen des brevets

(19)

(11) Veröffentlichungsnummer: **0 013 337 B1**

(12) **EUROPÄISCHE PATENTSCHRIFT**

(45) Veröffentlichungstag der Patentschrift:
24.03.82

(21) Anmeldenummer: **79104861.4**

(22) Anmeldetag: **04.12.79**

(51) Int. Cl.³: **C 09 D 5/00**, C 09 D 7/12,
C 08 L 27/06, C 08 L 33/04,
C 08 K 3/04, C 09 K 3/00

(54) Koks- oder Kohlepulver enthaltende Plastisole und deren Verwendung.

(30) Priorität: **23.12.78 DE 2855919**

(43) Veröffentlichungstag der Anmeldung:
**23.07.80 Patentblatt 80/15**

(45) Bekanntmachung des Hinweises auf die Patenterteilung:
**24.03.82 Patentblatt 82/12**

(84) Benannte Vertragsstaaten:
**AT BE CH FR GB IT NL SE**

(56) Entgegenhaltungen:
**FR-A-2 108 574**
**GB-A-1 161 554**
**US-A-4 013 603**

(73) Patentinhaber: **BASF Farben + Fasern
Aktiengesellschaft, Am Neumarkt 30,
D-2000 Hamburg 70 (DE)**

(72) Erfinder: **Blum, Rainer, Bannwasserstrasse 58,
D-6700 Ludwigshafen-Edigheim (DE)**
Erfinder: **Kaczinski, Friedrich, Drachterstrasse 11,
D-4400 Münster (DE)**
Erfinder: **Seitz, Max, Hamsens Busch 32,
D-4400 Münster-Wolbeck (DE)**

(74) Vertreter: **Habbel, Hans-Georg, Dipl.-Ing.,
Postfach 3429 Am Kanonengraben 11, D-4400 Münster
(DE)**

ACTORUM AG.

Koks- oder Kohlepulver enthaltende Plastisole und deren Verwendung

Die Erfindung bezieht sich auf ein Plastisol aus einer Dispersion eines feinteiligen Vinylchlorid- oder Alkylacrylat Homo- oder Mischpolymerisats in Weichmachern, die gegebenenfalls Pigmente, Farbstoffe, Füllstoffe sowie übliche Hilfsstoffe und Haftvermittler enthält.

Die flüssige Phase der Plastisole wird von Weichmachern gebildet, wie Trikresylphosphat, Acetyltributylcitrat, Diester der Phthalsäure, Adipinsäure und Sebazinsäure mit gesättigten und ungesättigten Alkoholen, z.B. Dioctylphthalat, Diisooctylphathalat, Dinonylphthalat, Diallylphthalat, Didecylphthalat. Andere geeignete Weichmacher gehören zu den Gruppen der gesättigten und ungesättigten flüssigen Polyester und der flüssigen Epoxidverbindungen. Der Gehalt an Weichmachern wird bei den Plastisolen so bemessen, dass er ausreichend ist, um ein Plastisol von flüssiger bis pastenförmiger Konsistenz zu bilden.

Die Plastisole können noch eine Reihe von Hilfsstoffen und Additiven, z.B. zur Regulierung der Viskosität, der Geliergeschwindigkeit, der Verbesserung der Licht- und Wärmestabilität und der Lagerstabilität enthalten sowie Pigmente, Farb- und Füllstoffe. Um die Haftung auf den zu beschichtenden Gegenständen zu verbessern, können die Plastisole bekannte haftverbessernde Zusätze, wie Phenolaldehydharze oder Epoxidharze mit den entsprechenden Härterkomponenten aus Dicyandiamid, Aminen oder Polyaminoamiden, enthalten. Mit der Haftverbesserung auf Metalloberflächen beschäftigen sich eine Reihe von Veröffentlichungen, z.B. die US-A-3 050 412, die DE-B-2 123 171, die DE-B-2 232 885 und die DE-A-2 512 366.

Ausser in Extrudier- und Kalandrierverfahren eignen sich die Plastisole für Beschichtung im Giess-, Tauch- und Spritzverfahren. Als Substrate für Beschichtungen können Textilgewebe, Holz, Holzwerkstoffe, Kunststoffe oder Metalle verwendet werden. Bei der Verwendung von Metallen kann die Beschichtung direkt auf das unvorbehandelte Metall aufgebracht werden. Vorteilhafter ist jedoch die Beschichtung von vorbehandelten, phosphatierten, grundierten oder lakkierten Metalloberflächen.

Beschichtungen aus Plastisolen erfordern zum Herstellen von ausgehärteten Filmen in der Regel Einbrenntemperaturen zwischen 100°C und 250°C.

Die Plastisole finden Verwendung zur Bildung von schalldämpfenden und gegen Korrosion und Steinschlag schützenden Überzügen auf Metallen, z.B. für Klimaschächte und Metalltüren. Ein weiteres sehr wichtiges Anwendungsgebiet ist die Verwendung als Metallverklebungsmittel, für Nahtabdichtungen und als Unterbodenschutz von Kraftfahrzeugen.

Die bekannten Plastisole enthalten aus technologischen und wirtschaftlichen Gründen ausser den farbgebenden Pigmenten, z.B. Titandioxid, Eisenoxidpigmente, Cadiumpigmente, verhältnismässig hohe Anteile an Füllstoffen, wie z.B. Talkum, Kreide, Kaolin, Asbest, Kieselgur, Schiefermehl, Bariumsulfat, Quarz und andere Mineralien.

Da diese Füllstoffe ein sehr hohes spezifisches Gewicht haben, beträgt die Dichte der die bekannten Füllstoffe enthaltenden Plastisole zwischen 1,5 und 1,9. Um einen guten Unterbodenschutz bei Kraftfahrzeugen zu erreichen, sind verhältnismässig hohe Schichtstärken erforderlich. Bei einer Schichtdecke von 2–7 mm bedeutet das, dass für einen PKW beispielweise 20–40 kg der Plastisolmasse benötigt werden. Das durch die hohe Dichte des Plastisols hervorgerufene verhältnismässig hohe Gewicht der auf dem Kraftfahrzeug aufgebrachten Unterbodenschutzmasse ist ein Nachteil, der die allgemeine Verwendung der Plastisole im Kraftfahrzeugbau stark erschwert.

Es wurden schon Versuche durchgeführt, die Dichte der die bekannten Füllstoffe enthaltenden Plastisole dadurch zu senken, dass diese Zusammensetzungen in bekannter Weise zu geschäumten Plastisolen verarbeitet werden. Bei dieser Arbeitsweise müssen jedoch Einbussen in der Haltbarkeit der Beschichtung und in der Korrosionsfestigkeit hingenommen werden.

Der vorliegenden Erfindung liegt die Aufgabe zugrunde, das hohe spezifische Gewicht der für Unterbodenschutzzwecke eingesetzten Plastisole unter Vermeidung der bekannten Nachteile zu senken, was gleichbedeutend ist mit einer Verringerung der Gesamtmasse des Kraftfahrzeuges. Das ist aus Gründen eines treibstoffsparenden Betriebes des Kraftfahrzeuges dringend erwünscht.

Diese Aufgabe wird durch ein Plastisol gelöst, das dadurch gekennzeichnet ist, dass die Dispersion als Füllstoff Koks, Braunkohle, Holzkohle oder Steinkohle in Pulverform enthält.

In der GB-A-1 161 554 ist eine Polyvinylchlorid-Dispersion in einem organischen Medium mit einem hitzehärtbaren vernetzenden System aus einer Mischung von 2–20%, einer aldehydkondensierbaren Verbindung, 1–10%, mindestens eines Methylen-Donators und 2–10% einer festen Verbindung, die eine grosse Oberfläche und eine poröse Struktur besitzt mit mikroskopischen Poren bekannt, die flüchtige, bei der Härtung entstehenden Spaltprodukte absorbiert.

Als absorbierende Feststoffe werden Silikagel, Fullererde, Diatomeenerde, Natriumsilikoaluminat genannt und auch Aktivkohle. Insbesondere Aktivkohle weist eine grosse innere Oberfläche auf und diese Absorptionskraft wird besonders herausgestellt. Der Hinweis auf Aktivkohle in dieser Literaturstelle mit ihrer mikroskopischen Struktur, der grossen inneren Oberfläche und hohen Absorptionsfähigkeit legt den Einsatz von Koks, Braunkohle, Holzkohle oder Steinkohle nicht nahe, da sich Ativkohle nicht in grossen Mengen einarbeiten lässt, weil durch ihre hohe Weichmacheraufnahme Plastisole erhalten würden, die wegen ihrer Konsistenz nicht mehr verarbeitbar sind. Aktivkohle wird gegenüber Koks, Braunkohle, Holzkohle oder Steinkohle dadurch erzielt, dass das Verkohlungsprodukt einem zusätzlichen Bearbeitungsverfahren entweder einem Chlorzink-Verfahren oder einem Wasserdampfverfahren unterworfen wird, bei welchem die Schwelkohle auf noch einmal 900 bzw. 1000°C erhitzt wird, um so die grosse absorbierende Oberfläche zu erzielen.

Aus der FR-A-2 108 574 ist ein Polyvinylchlorid-Plastisol bekannt, das 0,1–5 Gewichts-% Ofenruss, bezogen auf das PVC-Harz, aufweisen soll. Ofenruss weist ebenfalls eine grosse Oberfläche aber auch eine sehr hohe Ölzahl auf und die relativ hohe Dichte von 1,8 macht den Einsatz von Russ zur Lösung der Erfindung zugrundeliegenden Aufgabe unanwendbar.

In bevorzugter Ausführungsform enthalten die Plastisole 0–90 Gewichts-% Pigmente, Farb- und Füllstoffe und 10–100 Gewichts-% Koks- und/oder Kohlepulver, bezogen auf 100 Gewichts-% der Gesamtmenge von Pigmenten, Farb- und Füllstoffen, Koks- und Kohlepulvern. Die Koks- oder Kohlepulver, die im Sinne der Erfindung geeignet sind, haben natürlichen oder synthetischen Ursprung und sind fein gemahlene Pulver von Koks, Braunkohle, Holzkohle und Steinkohle. Diese Pulver haben eine Kornfeinheit zwischen 0,5 und 1000 Mikron und können beispielsweise durch Nassvermahlen bzw. Mikronisieren und anschliessendes Windsichten der entsprechenden Kohlearten hergestellt werden. Überraschenderweise lassen sich die beanspruchten Koks- oder Kohlepulver in grossen Mengen in die Plastisole einarbeiten und reduzieren die Dichte des Plastisols auf einen Wert zwischen 1,1 und 1,3. Um eine optimale Herabsetzung der Dichte zu erreichen, werden die Koks- oder Kohlepulver als alleinige Füllstoffe eingesetzt. Nur dann, wenn der durch die Koks- oder Kohlepulver hervorgerufene dunkelgraue bis schwarze Farbton aufgehellt oder verändert werden soll, oder um gewünschte Werte für Korrosionsschutz oder Schalldämpfung einzustellen, können Mischungen mit anderen Pigmenten, Farbstoffen oder Füllstoffen eingesetzt werden. In diesen Fällen können die Mischungen 0–90 Gwichts-% Pigmente, Farbstoffe oder Füllstoffe und 10–100 Gewichts-% Koks- und/oder Kohlepulver, bezogen auf 100 Gewichts-% der Gesamtmenge von Pigmenten, Farb- und Füllstoffen, Koks- und Kohlepulver, enthalten.

Das Einarbeiten der Koks- oder Kohlepulver in die erfindungsgemässen Plastisole kann mit den in der Lackindustrie gebräuchlichen Dispergiergeräten erfolgen.

Ausser der Herabsetzung des spezifischen Gewichtes bewirken die Koks- oder Kohlepulver gleichzeitig überraschenderweise eine Verbesserung der Verarbeitbarkeit des Plastisols beim Verspritzen aus einer Hochdruckspritzapparatur, und sie erhöhen die Widerstandsfähigkeit der eingebrannten Überzüge gegen mechanische Beschädigung. Auch können die erfindungsgemässen, an sich schon ein niedriges spezifisches Gewicht aufweisenden Plastisole in üblicher und bekannter Weise zu Schaumplastisolen verarbeitet werden. In vielen Fällen, in denen man zusätzlich zu den schalldämmenden und mechanischen Eigenschaften auch die geschäumte Form benötig, können auf diese Weise ausserordentlich leichte Beschichtungen mit guter Haftung erhalten werden, die bei der Belastung im Salzsprühtest einen ausserordentlich guten Korrosionsschutz bieten.

Die nachfolgenden Beispiele sollen die Erfindung erläutern, ohne sie jedoch auf diese Beispiele einzuschränken. Angaben über Prozente sind Gewichtsprozente, Teile sind Gewichtsteile.

Beispiel 1 (Vergleichsbeispiel)
23 Teile Emulsions-PVC, K-Wert 78
14 Teile Dioctylphthalat
 8 Teile Diisodecylphthalat
 3 Teile epoxidiertes Sojaöl
 8 Teile Butyl-Benzyl-phthalat
1,5 Teile Polyamidamin (Aminzahl 290)
0,5 Teile Bariumstearat
 3 Teile feinteiliges, amorphes $SiO_2$, ca. 200 m²/g
38 Teile Kreide (Calcit)
 1 Teil Eisenoxidschwarz

werden im Planetenmischer 20 Minuten zu einer homogenen Paste verknetet und durch kurzes Anlegen von Vakuum entgast. Das erhaltene Plastisol ist von hellgrauer Farbe und hat eine Dichte von 1,436. Es wird mittels einer Hochdruckspritzanlage auf die Unterseite von Metallkarossen als Unterbodenschutz aufgespritzt und 20 Minuten bei 175°C eingebrannt. Es wird eine elastische schwach graue Beschichtung erhalten.

Beispiel 2
Es wird wie in Beispiel 1 verfahren, nur mit dem Unterschied, dass anstelle der 38 Teile Kreide und des 1 Teil Eisenoxidschwarz 39 Teile feinst gemahlene Anthrazitkohle im gleichen Gewicht eingesetzt wird. Die Anthrazitkohle hat eine Korngrössenverteilung von 2 µm bis 60 µm. Das Plastisol ist schwarz und hat eine Dichte von 1,24. Es wird wie in Beispiel 1 weiterverarbeitet, und man erhält eine schwarze Beschichtung.

Beispiel 3
Es wird wie in Beispiel 1 verfahren, aber statt 39 Teilen Pigmente werden 20 Teile feingemahlene Anthrazitkohle eingesetzt, dies ergibt gleiche Pigment-Volumen-Konzentration wie in Beispiel 1. Die Dichte der Masse ist 1,28, die Farbe ist schwarz.

Beispiel 4
Es wird wie bei Beispiel 3 verfahren, aber statt Anthrazitkohle gemahlene Buchenholz-Retortenkohle einer mittleren Kornfeinheit von 24 µm verwendet. Das Plastisol ist schwarz und hat eine Dichte von 1,20.

Beispiel 5

Es wird wie bei Beispiel 1 verfahren, aber statt der Kreide und des Eisenoxidschwarz werden eingesetzt

30 Teile gemahlener Steinkohle-Koks, Korngrössenverteilung, 7 bis 40 μm

5 Teile Titandioxid (Rutil)

4 Teile Eisenoxidgelb

Das Plastisol ist von dunkelbrauner Farbe und hat eine Dichte von 1,24.

## Patentansprüche:

1. Plastisol aus einer Dispersion eines feinteiligen Vinylchlorid- oder Alkylacrylat Homo- oder Mischpolymerisats in Weichmachern, die gegebenenfalls Pigmente, Farbstoffe, Füllstoffe sowie übliche Hilfsstoffe und Haftvermittler enthält, dadurch gekennzeichnet, dass die Dispersion als Füllstoff Koks, Braunkohle, Holzkohle oder Steinkohle in Pulverform enthält.

2. Plastisol nach Anspruch 1, dadurch gekennzeichnet, dass es 0–90 Gewichts-% Pigmente, Farbstoffe und Füllstoffe und 10–100 Gewichts-% Kokspulver und/oder Kohlepulver, bezogen auf 100 Gewichts-% der Gesamtmenge an Pigmenten, Farbstoffen, Füllstoffen, Kokspulvern und Kohlepulvern, enthält.

3. Verwendung des Plastisols gemäss der Ansprüche 1 bis 2 als Unterbodenschutzmasse für Kraftfahrzeuge.

4. Verwendung des Plastisols gemäss der Ansprüche 1 bis 2, als Verklebemasse oder Abdichtungsmasse oder Antidröhnmasse für Metallgegenstände.

## Claims

1. Plastisol of a dispersion of a finely divided vinyl chloride homopolymer or copolymer or alkyl acrylate homopolymer or copolymer in plasticizers, which optionally contains pigmenst, dyes, fillers, usual auxiliaries and adhesion agents, characterized by that the dispersion contains as filler coke, brown coal, wood charcoal or hard coal in powder form.

2. Plastisol according to claim 1, characterized by that it contains 0–90 weight-% of pigments, dyes and fillers and 10–100 weight-% of coke powder and/or coal powder, based on 100 weight-% of the total amount of pigments, dyes, fillers, coke powders and coal powders.

3. Use of the plastisol according to claims 1 to 2 as an underbody protective compound for motor vehicles.

4. Use of the plastisol according to claims 1 to 2 as an adhesive compound or sealing compound or an anti-noise compound for metal articles·

## Revendications

1. Plastisol formé d'une dispersion d'un produit d'homopolymérisation ou de copolymérisation finement divisé de chlorure de vinyle ou d'acrilate d'alkyle dans des plastifiants, qui contient éventuellement des pigments, colorants, charges, ainsi que des adjuvants et agents d'accrochage usuels, caractérisé par le fait que la dispersion contient comme charge du coke, du lignite, du charbon de bois ou de la houille sous forme de poudre.

2. Plastisol selon la revendication 1, caractérisé par le fait qu'il contient 0 à 90% en poids de pigmenst, de colorants et de charges et 10 à 100% en poids de poudre de coke et/ou de poudre de charbon, par 100% en poids de la quantité totale de pigments, de colorants, de charges, de poudres de coke et de poudres de charbon.

3. Application du plastisol selon les revendications 1 et 2 comme masse de protection de bas de caisse pour véhicules automobiles.

4. Application du plastisol selon les revendications 1 et 2 comme masse de collage ou masse d'étanchéité ou masse insonorisante pour objets métalliques.